(19) Europäisches Patentamt
European Patent Office
Office européen des brevets

(11) Publication number: **0 106 099**
**A2**

# (12) EUROPEAN PATENT APPLICATION

(21) Application number: 83108685.5

(22) Date of filing: 02.09.83

(51) Int. Cl.³: C 08 J 7/04
B 60 K 15/02, C 09 D 5/18

(30) Priority: 10.09.82 JP 156829/82

(43) Date of publication of application: 25.04.84 Bulletin 84/17

(84) Designated Contracting States: DE FR GB

(71) Applicant: NISSAN MOTOR COMPANY, LIMITED
No.2, Takara-cho, Kanagawa-ku
Yokohama-shi Kanagawa-ken 221(JP)

(72) Inventor: Ohashi, Keiji
3-68 Oppamahigashi-cho Yokosuka-shi
Kanagawa-ken Uragoryo(JP)

(72) Inventor: Nakazawa, Keiji
8-A210, Ikego 3-chome Zushi-shi
Kanagawa-ken Higashizushi Haitsu(JP)

(72) Inventor: Tanabem, Kikuo
10-17, 2-chome Tode Saiwai-ku
Kawasaki-shi Kanagawa-ken(JP)

(74) Representative: Patentanwälte Grünecker, Dr. Kinkeldey, Dr. Stockmair, Dr. Schumann, Jakob, Dr. Bezold, Meister, Hilgers, Dr. Meyer-Plath
Maximilianstrasse 58
D-8000 München 22(DE)

## (54) Plastic fuel tank.

(57) A plastic fuel tank having a outer surface which is applied with paste or tackifier. This paste or tackifier contain foaming material which is made of a fire-proof agent reaction-catalyst material, a carbon-producing material, and a noncombustible material.

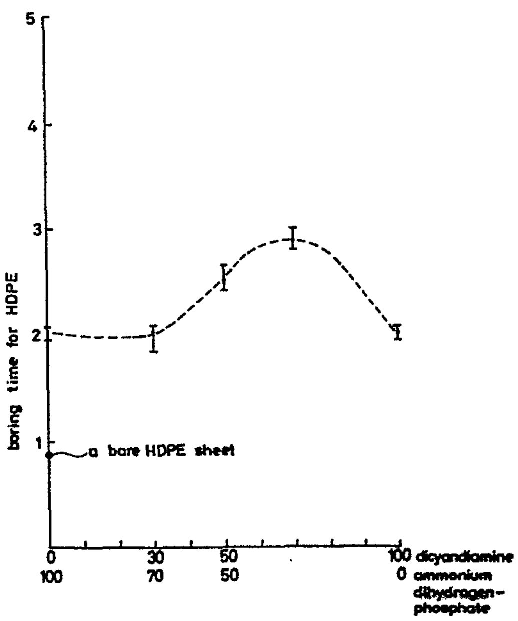


FIG. 1

EP 0 106 099 A2

## TITLE OF THE INVENTION

Plastic Fuel Tank

## BACKGROUND OF THE INVENTION

This invention relates to a plastic fuel tank having a high fire resistance.

In the past, there has been known a plastic fuel tank which is formed of fuel-impermeable materials such as, for example, thermoplastic polyolefinic resins.

With such a conventional plastic fuel tank, however, when gasoline is spilt over a road and ignited to fire upon accidents such as vehicle collisions, the plastic fuel tank, if installed on a vehicle as collised, is liable to be heated by flames of gasoline to fuse so that gasoline in the fuel tank may leak outside, thus leading to a fear of occurrence of a big accident. To cope with this problem, a plastic fuel tank has been proposed which is moulded from plastic materials with addition of flame retarders or fire-resisting materials, but the fuel tank thus proposed has almost no fire-proof effect during fires caused by gasoline. To improve this, if a great amount of fire retarder or fire-resisting material is added, physical properties of the plastic material are lowered. On the other hand, there has also been proposed a plastic fuel tank having a heat-insulating plate formed of metallic materials, which, however, involves another problem that the intended weight-reducing effect inherent in plastic fuel tanks is lowered.

## SUMMARY OF THE INVENTION

In view of the above, an object of the present invention is to provide a novel and improved plastic fuel tank of the character described which is excellent in fire resistance.

Another object of the present invention is to provide a highly durable plastic fuel tank of the character described which, when installed on the body of a vehicle at the lower portion thereof, is capable of effectively reducing damage thereof which would be caused by impinging of small stones or pebbles knocked off from road surfaces during travelling of the vehicle.

Briefly described, these and other objects are accomplished by a provision of a plustic fuel tank having an outer surface which is applied with paste or tackifier containing foaming material which is made of a fire-proof agent reaction-catalyst material, a carbon-producing material, and a noncombustible material.

The above and other objects, features and advantages of the present invention will become apparent from the following detailed description of embodiments of the invention when taken in conjunction with the accompanying drawings.

BRIEF DESCRIPTION OF THE DRAWINGS

Fig. 1 is a graphic representation illustrating a change in the period of time required until a high-density polyethylene sheet of 2 mm thickness according to the invention has been bored by the use of a gas burner with respect to the varying concentrations of dicyandiamine and ammonium dihydrogen-phoshate applied to the sheet surface;

Fig. 2 is a view similar to Fig. 1 but with dicyandiamine being replaced by dipenta-erythritol; and

Fig. 3 is an explanatory view showing how to bore the sheet by using the gas burner.

DETAILED DESCRIPTION OF THE PREFERRED EMBODIMENTS

A plastic fuel tank of the present invention is applied with a paint or tackifier containing foaming materials, which should be made of a fire-proof agent reaction-catalyst material, a carbon-producing material, and a noncombustible-gas-producing material because lack of any one of these component materials results in a poor fire-proof effect.

The fire-proof agent reaction-catalyst material as employed in the present invention includes high phosphorus-containing materials, which are adapted to produce phosphoric acid most effective to prevent firing among inorganic acids. Of such high phosphorus-containing materials, ammonium phosphate is the most preferable which is decomposed at a relatively low temperature in the following manner to provide an excellent fire-proof effect.

Ammonium dihydrogen-phosphate

$NH_4H_2PO_4$ 300 C $H_3PO_4 + NH_3$ ... choke-cooling effect due to a noncombustible gas
(orthophosphoric acid)

$H_4P_2O_7 + H_2O$ ... dehydration-cooling effect
(pyrophosphoric acid)

$2HPO_3 + H_2O$ ... dehydration-cooling effect
(metaphosphoric acid)

$P_2O_5 + H_2O$ ... dehydration-cooling effect
(phosphorus pentaoxide)

The carbon-producing material contains at least one of the components which consist of casein, starch, mono-, di-, or tri-pentaerythritol, and polyalcohol. In particular, where water-resisting property is desired, di- or tri-pentaerythritol is the most preferable. In the following, such a remarkable effect is shown taking dipentaerythritol as an example:

Dipentaerythritol

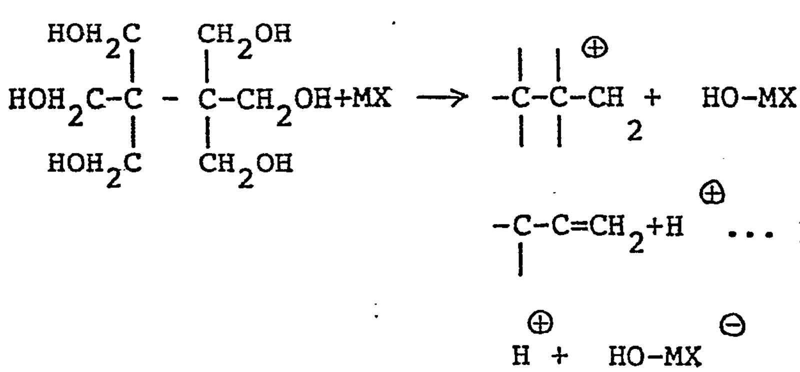

... partially dehydrated carbon product (foamed heat-insulating layer)

$MX + H_2O$ ... dehydration-cooling effect

MX: salt of inorganic acids (ammonium dihydrogen-phosphate)

The noncombustible-gas-producing material contains at least one of the components comprising dicyandiamide, melamine,

chlorinated paraffin, and the like, and generates noncombustible gas to form a thick heat-insulating layer having a great fire-proof effect, which is described below taking dicyandiamide as an example:

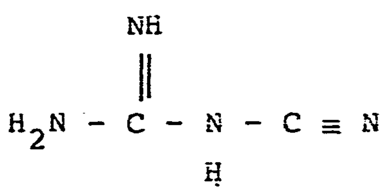

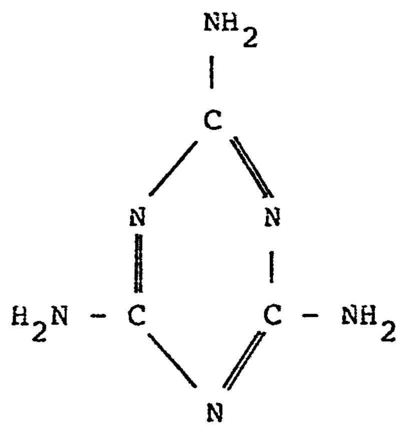

(melamine)

generation of $NH_3$ by thermal decomposition, chock-cooling effect due to noncombustible gas

The fire-resisting effect of a foaming material composed of the above-mentioned three kinds of materials is enhanced by the combined action of choking effect due to the generation of noncombustible gas, cooling effect due to the generation of water, and heat-insulating effect due to the formation of a foamed layer. In this connection, however, it is to be noted that application of a carbon-producing material alone or of a noncombustible-gas-producing material alone does not provide any satisfactory fire-resisting effect.

Fig. 1 illustrates the results of a test in which a sheet of high-density polyethylene (abbreviated as HDPE later) of 2 mm thickness was applied with dicyandiamide, a noncombustible-gas producing material, and ammonium dihydrogen-phosphate, a fire-proof agent reaction-catalyst material, at a total application rate of 1 gram per 20cm$^2$ of the HDPE sheet with the proportions of the applying materials being varied continuously, and the time was measured for boring the HDPE sheet by the use of

a gas burner.

Fig. 2 also illustrates the results of another test which was conducted under the same conditions as in the previous test shown in Fig. 1 except that dipentaerythritol was employed as a carbon-producing material in place of dicyandiamide, and the proportions of dipentaerythritol and ammonium dihydrogen-phosphate were continuously varied.

From the results of these tests, it was found that the HDPE plate applied with dipenta-erythritol alone or dicyandiamide alone was poor in the fire-resisting effect, and the compounding ratio for providing a good fire-resisting effect was between 1 and 4 with respect to dicyandiamide to ammonium dihydrogen-phosphate, and between 0.43 and 1.5 with respect to dipentaerythritol to ammonium dihydrogen-phosphate.

In view of the above, the fuel tank of the present invention is obtained by applying to the HDPE sheet a paint or tackifier which is produced by compounding the above foaming material with a binder of noncombustible materials such as tar.

It is preferable to determine the quantity of addition of the foaming material to be in such a range that the viscosity of the paint or tackifier as produced becomes less than 17000 cp. Further, the ratio of the fire-proof agent reaction-catalyst material to the carbon-producing material should preferably be 1 : 0.48 - 1.5, and the ratio of the fire-proof agent reation-catalyst material to the noncombustible-gas-producing material be 1 : 1 - 4.

With the plastic fuel tank of the present invention as formed in the above manner, when flames come into contact with the paint or tackifier containing the foaming material on the surface of the fuel tank, the fire-proof agent reaction-catalyst material is first decomposed to produce phosphoric acid, which is the most effective for fire resistance among various inorganic acids, and then the phosphoric acid thus produced reacts with the carbon-producing material to form phosphate. Subsequently, as the temperature rises, the phosphate is decomposed to produce a

tremendous amount of carbon, water and carbon dioxide, and simultaneously with the decomposition of the phosphate, the noncombustible-gas-producing material begins to be decomposed to evolve a great amount of noncombustible gas, causing carbon, the decomposition residue of phosphate, to foam to form a thick, sponge-like heat-insulating layer thereby to delay the time required until the plastic material of the fuel tank reaches its firing temperature.

From the foregoing, it is to be noted that the fire-proof agent reaction-catalyst material is the above-mentioned high phosphorus-containing material and hence should be decomposed at a temperature lower than that at which the carbon-producing material is decomposed. Also, the noncombustible-gas producing material should be selected from materials which are decomposed simultaneously with phosphate. Moreover, since polyethylene has poor adhesive property, the surface of the fuel tank applied with the foaming material may be covered with a thin coating of polyethylene having such a thickness as not to prevent foaming of the foaming material, and then fused by heat to the tank surface unprovided with the foaming material.

As described in the foregoing, according to the present invention, a plastic fuel tank is provided which is constructed such that the outer surface of the fuel tank is applied with a paint or tackifier admixed with a foaming material which is composed of a fire-proof agent reaction-catalyst material, a carbon-producing material and a noncombustible-gas-producing material. With this construction, the present fuel tank is enhanced in its fire resistance to a remarkable extent as compared with the conventional plastic fuel tank, and, when installed on the body of a vehicle at the lowe portion thereof, is by far less subjected to damages thereof caused by small stones or pebbles, which are knocked off from the road surface to impinge against the vehicle body, thus improving its durability to a substantial extent.

Now, description will be made of embodiments of the present

invention, reference examples, and comparative examples.

Reference Example 1

Test pieces of high-desity polyethylene, each 2 mm thick by 100 mm wide by 100 mm long, were subjected to a cold plasma treatment and then applied with a fire-proof paint composed of the compouding components as shown in Table 1 below. These test pieces thus prepared and comparative test pieces applied with no paint were subjected to the combustion test in which each of the test pieces was placed in a horizontal manner above a gas burner at a distance h of 100 mm, as shown in Fig. 3, and the time required until the test pieces were fired was measured. The results of the combustion test are shown in Table 2 below, from which it has been found that the high-desity polyethylene applied with the paint was markedly improved in fire resistance as compared with that without application of the paint.

Table 1

| COMPONENTS | WEIGHT (%) |
|---|---|
| Distilled water | 29.5 |
| Alkylphosphate | 0.5 |
| Potassium polyphosphate | 1.0 |
| Carbinol acetate | 2.0 |
| Melamine | 7.8 |
| Dipentaerythritol | 3.9 |
| PHOS-CHEK ® P/30 * | 23.0 |
| Titanium white | 7.7 |
| Chlorinated paraffin | 4.6 |
| Dibutyle phthalate | 0.9 |
| Alkyd resin | 19.0 |
| Total | 100.0 |

* flame retarder of ammonium phosphate groups (made by Monsanto Co., Ltd.)

Table 2

| test piece No. | HDPE sheet | time required for firing(sec.) |
|---|---|---|
| 1 | applied with no paint | 40 |
| 2 | applied with a fire-proof paint application rate 100g/$m^2$ | 100 |
| 3 | applied with a fire-proof paint application rate 300g/$m^2$ | 180 |

Embodiment 1 and Comparative Example 1

Seven 50 liter fuel tanks of high-desity polyethylene were prepared by using a large blow molding machine manufactured by Ishikawajima Harima Heavy Industries Co., Ltd., each applied on their outer surface with a primer for polyolefinic resins made by Showa Kobunshi K.K. and then dried at room temperatue for 10 minutes. Thereafter, a paint containing the foaming material as shown in Table 1 was coated on the primer-applied tank surfaces at a rate of 300 g/$mm^2$. Seven pieces of these fuel tanks thus prepared and seven comparative fuel tanks of high-density polyethylene without application of the paint were mounted on a bodies and subjected to the standard fire resistance test for passenger-car plastic tanks, specified by the Japanese Ministry of Transportation. Table 3 shows the results of this test, from which it has been recognized that the fuel tanks applied with the paint were remarkably enhanced in their fire resistance as compared with those without application of the paint.

Table 3

| | HDPE fuel tank | judgement on gasoline leakage from tank | | | | | | |
|---|---|---|---|---|---|---|---|---|
| | | 1 | 2 | 3 | 4 | 5 | 6 | 7 |
| comparative sample 1 | applied with no paint | O | X | X | X | X | X | O |
| embodiment 1 | applied with a fire-proof paint application rate $200g/m^2$ | O | O | O | O | O | O | O |

O ... no leakage of gasoline

X ... leakage of gasoline

Reference Example 2

Test pieces of high-desity polyethylene, 2 mm thick by 100 mm wide by 100 mm long, were applied with a fire-proof tackifier of acrylic groups containing the foaming material composed of the compounding components as shown in Table 4. These test pieces thus prepared and comparative test pieces applied with no paint were subjected to the combustion test by using a gas burner, similarly to the case of the reference example 1.

Table 5 shows the results obtained, from which it has been found that the test pieces of high desity polyethylene applied with the tackifier were remarkably enhanced in fire resistance as compared with those applied with no tackifier.

Table 4

| COMPONENTS | WEIGHT (%) |
|---|---|
| DB5537 ® * | 65 |
| PHOS-CHEK ® P/30 | 23 |
| Holorinated paraffin | 4 |
| Melamine | 5 |
| Dipentaerythritol | 3 |
| Total | 100 |

* tackifier of acrylic groups made by Diabond Co., Ltd.

Table 5

| test piece No. | HDPE sheet | time required for firing (sec.) |
|---|---|---|
| 1 | applied with no tackifier | 40 |
| 2 | applied with a tackifier application rate $100g/m^2$ | 120 |
| 3 | applied with a tackifier application rate $300g/m^2$ | 200 |

Embopdiment 2 and Comparative Example 2

Seven 50 liter fuel tanks of high-density polyethylene were prepared by using a large blow molding machine manufactured by Ishikawajima Harima Heavy Industries Co., Ltd., and applied on their outer surface with a fire-proof tackifier of acrylic groups containing the foaming material as indicated in Table 4. The fire-resisting fuel tanks thus obtained and seven comparative fuel tanks of high-density polyethylene not applied with the tackifier were mounted on white bodies and subjected to the standard fire resistance test for passenger-car plastic tanks, specified by the Japanese Ministry of Transportation. The results obtained are shown in Table 6, from which it has been

noted that the fuel tanks applied with the tackifier were markedly improved in their fire resistance as compared with those without application of the tackifier.

Table 6

| | HDPE fuel tank | judgement on gasoline leakage from tank | | | | | | |
|---|---|---|---|---|---|---|---|---|
| | | 1 | 2 | 3 | 4 | 5 | 6 | 7 |
| comparative example 1 | applied with no tackifier | O | X | X | X | X | X | X |
| embodiment 1 | applied with a tackifier application rate 200g/$m^2$ | O | O | O | O | O | O | O |

O ... no leakage of gasoline

X ... leakage of gasoline

What is claimed is;

1. A plastic fuel tank having an outer surface which is applied with paste or tackifier, said paste or tackfier containing foaming material which is made of a fire-proof agent reaction-catalyst material, a carbon-producing material, and a noncombustible-gas-producing material.

2. A plastic fuel tank claimed in claim 1, wherein, said tank adapted for vehicle's tank.

3. A plastic fuel tank claimed in claim 2, wherein, said foaming material is composed so that the ratio of the fire-proof agent reaction-catalyst material to the carbon-producing material is between 1:0.48 and 1:1.5, and the ratio of the fire-proof agent reaction-catalyst material to the noncombustible-gas-producing material is between 1:1 and 1:4.

4. A plastic fuel tank claimed in claim 2, wherein, said fire-proof agent reaction catalyst material is high phosphorus-containing material.

5. A plastic fuel tank claimed in claim 4, wherein, said high phosphrus-containing material is ammonium dihydrogen-phosphate.

6. A plastic fuel tank claimed in claim 2, wherein, said carbon-producing material contains at least one of the components which consist of casein, starch, mono-pentaerythritol, di-pentaerythritol, tri-pentaerythritol, and polyalcohol.

7. A plastic fuel tank claimed in claim 2, wherein, said noncombustible-gas-producing material contains at least one of the components which consist of dicyandiamide, melamine, chlorinated paraffin.

8. A plastic fuel tank claimed in claim 2, wherein, said fire-proof agent reaction catalyst material is ammonium dihydrogen-phosphate, said carbon-producing material is dipentaerythritol, and said noncombustible-gas-producing material is dicyandiamide.

9. A plastic fuel tank claimed in claim 8, wherein, said foaming material is composed so that the ratio of ammonium dihydrogen-phosphate to dipentaerythritol is between 1:0.48 and 1:1.5, and the ratio of ammonium dihyrogen-phosphate to dicyandiamide.

FIG. 1

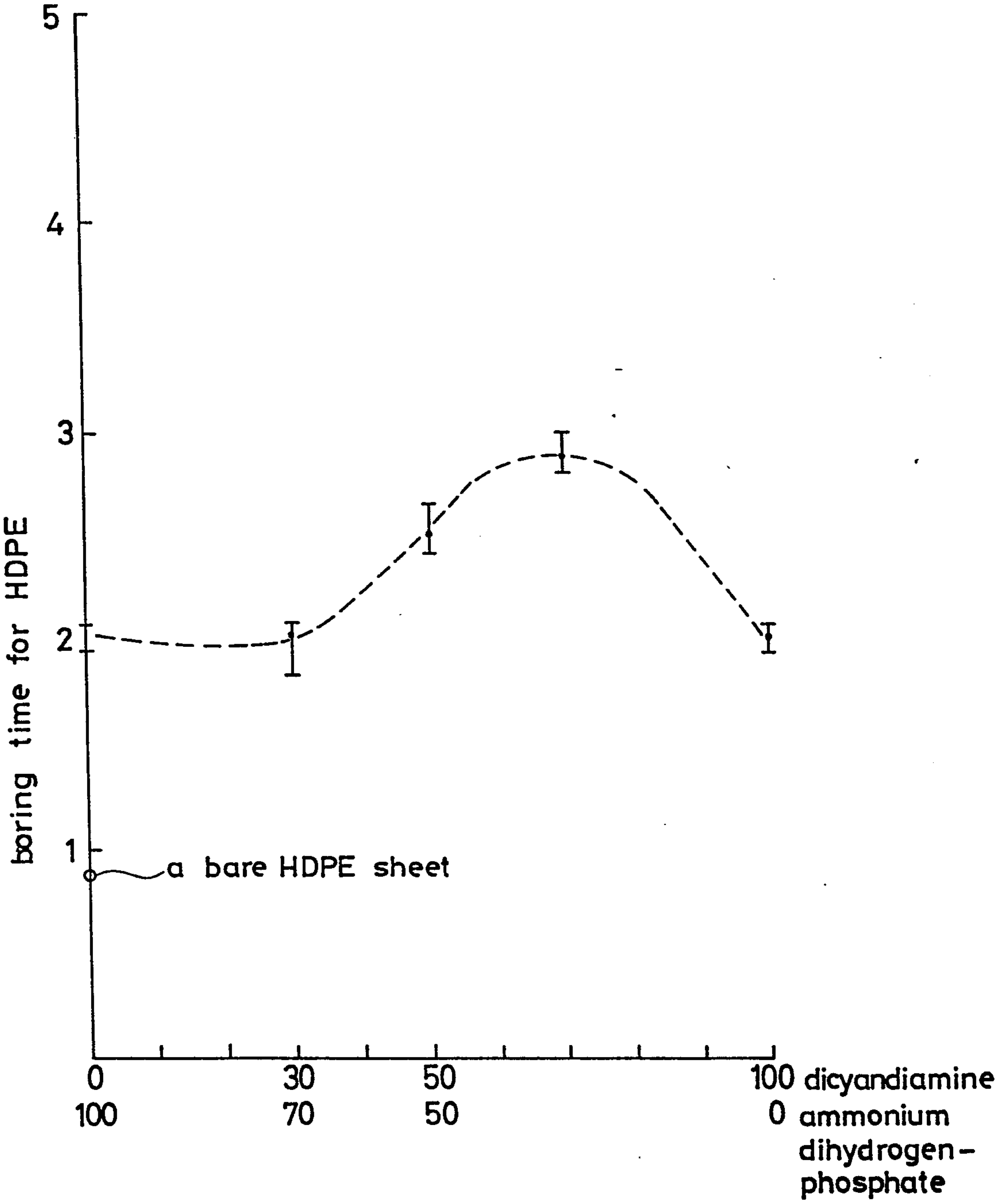
5
4
3
2
1
boring time for HDPE
a bare HDPE sheet
0
100
30
70
50
50
100 dicyandiamine
0 ammonium
dihydrogen-
phosphate

FIG. 2

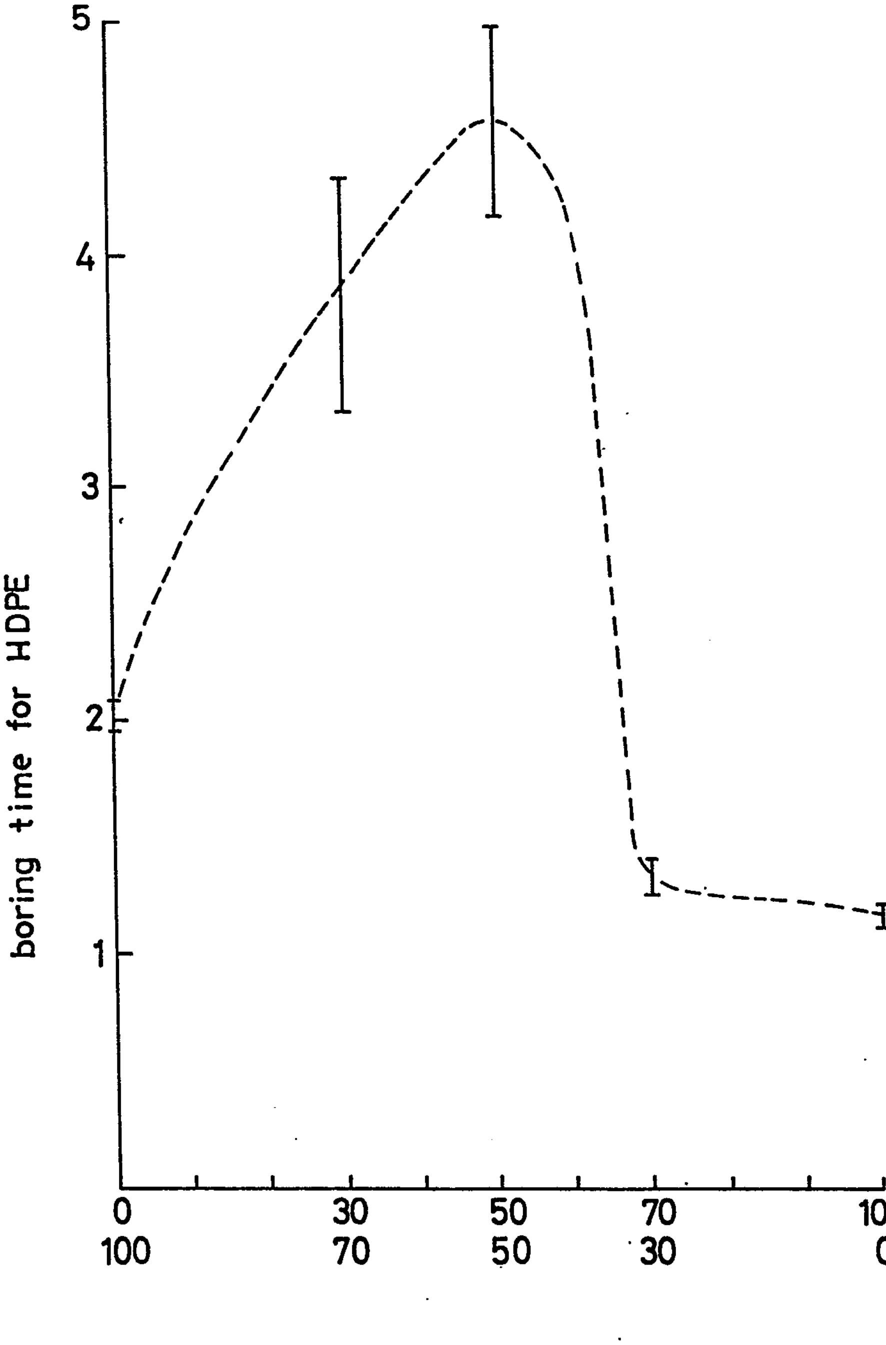
5
4
3
2
1
boring time for HDPE
0
100
30
70
50
50
70
30
100
0
dicyandiamine
ammonium
dihydrogen
phosphate

FIG. 3

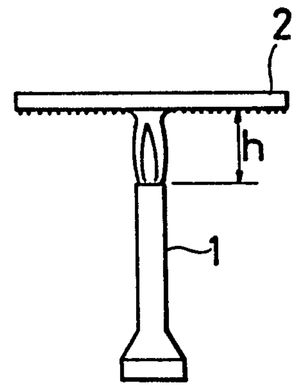
2
h
1